# EUROPÄISCHE PATENTANMELDUNG

(11) **EP 3 868 547 A1**
(43) Veröffentlichungstag der Anmeldung: **25.08.2021**
(21) Anmeldenummer: 21158886.8
(22) Anmeldetag: 24.02.2021
(51) Int. Cl.: B29C 65/20, B29C 65/78, E06B 3/96, B29K 27/06, B29K 23/00

(54) **SPANNVORRICHTUNG**

(30) Priorität: 24.02.2020 AT 5003420 U
(71) Anmelder: IFN-Holding AG, 4050 Traun (AT)
(72) Erfinder: HOCHREITER, Herbert, 4048 Puchenau (AT)
(74) Vertreter: Burger, Hannes

(57) **Zusammenfassung**

Die Erfindung betrifft eine Spannvorrichtung (3) umfassend ein erstes Spannelement (4) und ein in einem Abstand (6) dazu angeordnetes zweites Spannelement (5), zwischen denen ein Kunststoffprofil (1 oder 2) eingespannt werden kann, wobei bevorzugt zwischen dem ersten Spannelement (4) und dem zweiten Spannelement (5) ein in einer ersten Richtung verstellbares Anlageelement (7) angeordnet ist oder das zweite Spannelement (5) das in einer ersten Richtung verstellbare Anlageelement (7) umfasst, und wobei das erste und/oder das zweite Spannelement (4, 5) zumindest ein Zentrierelement (22) aufweist.

## Beschreibung

Die Erfindung betrifft eine Spannvorrichtung umfassend ein erstes Spannelement und ein in einem Abstand dazu angeordnetes zweites Spannelement, zwischen denen ein Kunststoffprofil eingespannt werden kann, wobei bevorzugt zwischen dem ersten Spannelement und dem zweiten Spannelement ein in einer ersten Richtung verstellbares Anlageelement angeordnet ist oder das zweite Spannelement das in einer ersten Richtung verstellbare Anlageelement umfasst.

Weiter betrifft die Erfindung eine Schweißvorrichtung zum Verschweißen von zwei Kunststoffprofilen miteinander umfassend ein Heizelement, insbesondere einen Schweißspiegel, und zumindest eine Spannvorrichtung zum Einspannen von zumindest einem der beiden Kunststoffprofile.

Zudem betrifft die Erfindung ein Verfahren zum Verschweißen von zwei Kunststoffprofilen miteinander, nach dem die beiden Kunststoffprofile in je einer Spann-einrichtung gehalten werden, zu verschweißende Endbereiche der beiden Kunststoffprofile mit einem Heizelement erhitzt werden und danach die beiden Kunststoffprofile mit den erwärmten Endbereichen gegeneinander gepresst werden, wobei vorzugsweise während des Erhitzens der zu verschweißenden Endbereiche Anlageelemente der Spannvorrichtungen gegen das Heizelement gepresst werden, wobei die Anlageelemente vorzugsweise jeweils direkt an einem der Kunststoffprofile und direkt an dem Heizelement anliegend angeordnet werden, sodass eine Stirnfläche des Anlageelements mit einer Stirnfläche des zu verschweißenden Endbereichs der Kunststoffprofile fluchtend angeordnet wird, wobei weiter nach dem Erwärmen der beiden Kunststoffprofile das Heizelement entfernt wird und die beiden Kunststoffprofile mit den Endbereichen aneinandergedrückt werden.

Kunststoffprofile für Fenster und Türen werden heute üblicherweise in den Eckbereichen verschweißt. Dabei wird zur Erhitzung der zu verschweißenden Profilendbereiche ein Schweißspiegel eingesetzt. Nachdem die Profilendbereiche die für das Verbinden richtige Temperatur haben, wird der Schweißspiegel entfernt und die beiden Profile unter Druck miteinander verbunden. Es entsteht dabei eine Schweißwulst, der nachträglich wieder entfernt werden muss, da er die Oberflächenoptik der Fenster bzw. Türen stört. Zudem stört der Schweißwulst auch die Dichtheitsfunktion, da keine umlaufende Ebene gegeben ist.

Zur Vermeidung dieses Wulstes sind im Stand der Technik bereits unterschiedlichste Vorrichtungen und Verfahren beschrieben worden. Insbesondere beschreibt die auf die Anmelderin zurückgehende AT 520 667 A1 beschreibt eine Spannvorrichtung, eine Schweißvorrichtung und ein Verfahren, wie sie voranstehend beschrieben wurden.

Aufgabe der vorliegenden Erfindung war es, eine verbesserte Möglichkeit zum Verbinden von Kunststoffprofilen zur Verfügung zu stellen.

Die Aufgabe der Erfindung wird mit der eingangs genannten Schweißvorrichtung gelöst, bei der das erste und/oder das zweite Spannelement zumindest ein Zentrierelement aufweist.

Die Aufgabe der Erfindung wird mit der eingangs genannten Schweißvorrichtung gelöst, bei der die Spannvorrichtung erfindungsgemäß ausgebildet ist.

Zudem wird die Aufgabe der Erfindung mit dem eingangs genannten Verfahren gelöst, nach dem vorgesehen ist, dass nach Entfernung des Heizelementes die Spanneinrichtungen mit zumindest einem Zentrierelement zueinander zentriert werden.

Von Vorteil ist dabei, dass mit dem zumindest einen Zentrierelement Toleranzen im System Spannvorrichtung bzw. Schweißvorrichtung besser ausgeglichen werden können, sodass nach dem Verschweißen der Kunststoffprofile die Ebenheit des Übergangs zwischen den Kunststoffprofilen mit höherer Genauigkeit bzw. höherer Sicherheit erreicht werden kann bzw. vorliegt. Diese wiederum wirkt sich positiv auf die Bedruckbarkeit der Kunststoffprofile, beispielsweise mittels Digitaldruck, z.B. mit einem Tintenstrahldrucker, aus, da damit ein besseres Druckergebnis bzw. Druckbild erreicht werden kann.

Gemäß einer Ausführungsvariante der Erfindung kann vorgesehen sein, dass das Zentrierelement in oder an dem Anlageelement angeordnet ist. Das Zentrierelement kann damit näher an die Scheißstelle herangebracht werden, womit die Ebenflächigkeit der Verbindungsstelle mit den daran anschließenden Oberflächen der Kunststoffprofile weiter verbessert werden kann. Nach einer anderen Ausführungsvariante der Erfindung kann vorgesehen sein, dass das Zentrierelement stiftförmig ausgebildet ist. Es ist damit möglich, den Einfluss des Zentrierelementes auf die Temperaturverteilung im Bereich der Schweißstelle klein zu halten, womit in weiterer Folge das Schweißergebnis verbessert werden kann.

Zur schnelleren und sichereren Ausbildung der Zentrierung der Spannelemente beim Entfernen des Heizelementes aus dem Bereich zwischen den Kunststoffprofilen kann gemäß einer weiteren Ausführungsvariante der Erfindung vorgesehen sein, dass das Zentrierelement zumindest bereichsweise einen sich verjüngenden Querschnitt aufweist.

Entsprechend einer anderen Ausführungsvariante der Erfindung kann vorgesehen sein, dass das Zentrierelement in der ersten Richtung, also in der Richtung der Verstellung der Anlageelemente, verstellbar ausgebildet ist. Es ist damit einfacher möglich, den Anlagebereich des Anlageelementes an dem Heizelement relativ klein zu halten, womit wiederum der Einfluss der Anlageelemente auf die Temperaturverteilung im Bereich der Schweißstelle reduziert werden kann.

Bevorzugt erfolgt die Zentrierung der Spannelemente zueinander automatisch mit bzw. bei der Entfernung des Heizelementes aus dem Bereich zwischen den beiden Kunststoffprofilen. Das Zentrierelement kann dazu vorgespannt in der Spannvorrichtung angeordnet sein. Mit diesen Ausführungsvarianten kann eine Zentrierung der Spannelemente bereits zu einem sehr frühen Zeitpunkt automatisiert erreicht werden, noch bevor die beiden Kunststoffprofile gegeneinander gepresst werden.

Nach einer anderen Ausführungsvariante der Erfindung kann vorgesehen sein, dass das Zentrierelement zumindest teilweise aus einem Polymer besteht, das ausgewählt ist aus einer Gruppe bestehend aus PA, PTFE, PEEK, polymere Kunststoffe auf Basis von Polyphthalamid (PPA). Insbesondere diese Polymere haben sich nicht nur aufgrund der Temperaturbeständigkeit, sondern vor allem auch aufgrund der geringen Haftungsreibung zum Heizelement und zu den Kunststoffprofilen als vorteilhaft erwiesen. Darüber hinaus haben Zentrierelemente aus zumindest einem dieser Werkstoff den Vorteil der geringen Wärmeleitfähigkeit, sodass sie den das Heizelement, insbesondere den Schweißspiegel, direkten berühren können, ohne es zu kühlen. Es ist damit möglich, trotz Kontakt des Zentrierelementes mit dem Heizelement die Temperatur zu zumindest annähernd 100% in das Kunststoffprofil zu bringen.

Zum besseren Verständnis der Erfindung wird diese anhand der nachfolgenden Figuren näher erläutert.

Es zeigen jeweils in vereinfachter, schematischer Darstellung:
- Fig. 1: eine Schweißvorrichtung mit einer Spannvorrichtung für das Schweißen von Kunststoffprofilen;
- Fig. 2: die Schweißvorrichtung mit der Spannvorrichtung nach Fig. 1 in der Heizstellung;
- Fig. 3: die Schweißvorrichtung mit der Spannvorrichtung nach Fig. 1 in der Heizstellung mit bereits erweichten Endbereichen der Kunststoffprofile;
- Fig. 4: die Schweißvorrichtung mit der Spannvorrichtung nach Fig. 1 in der Fügestellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

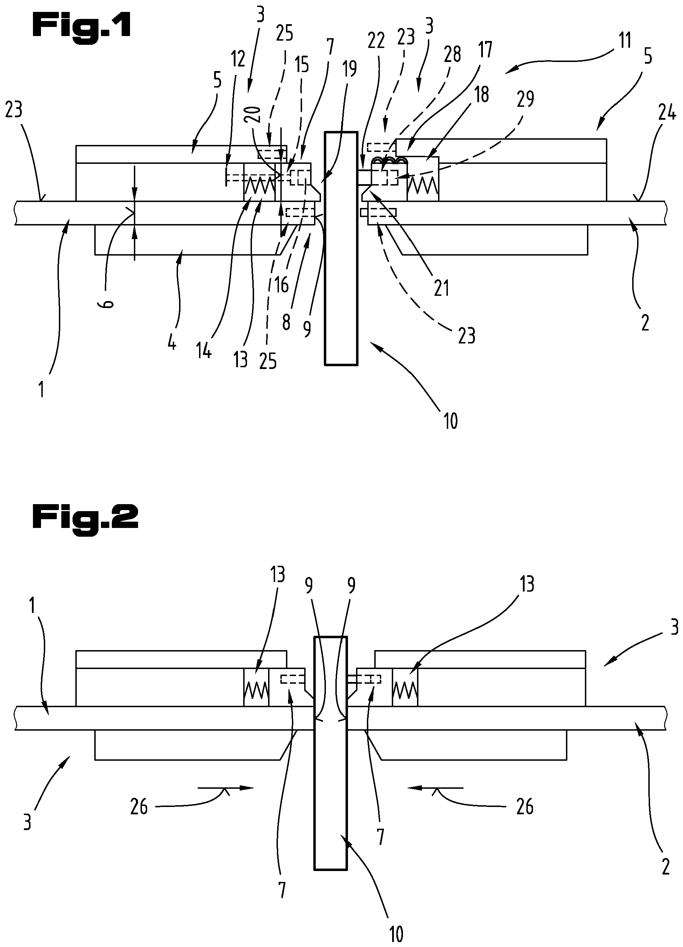

In den Fig. 1 bis 4 sind Verfahrensschritte zum Verschweißen von einem ersten Kunststoffprofil 1 mit einem zweiten Kunststoffprofil 2.

Die beiden Kunststoffprofile 1, 2 sind stark vereinfacht dargestellt. Bevorzugt handelt es sich bei diesen Kunststoffprofilen 1, 2 um Hohlkammerprofile, wie sie in der Herstellung von Fenstern und Türen für deren Rahmen eingesetzt werden. Die Kunststoffprofile 1, 2 weisen daher eine oder mehrere Hohlkammern im Inneren auf, die gegebenenfalls mit Stegen voneinander getrennt sind. Da derartige Kunststoffprofile 1, 2 an sich aus dem Stand der Technik bekannt sind, sei bezüglich weiterer Einzelheiten dazu auf den einschlägigen Stand der Technik verwiesen.

Als Kunststoff für die beiden Kunststoffprofile 1, 2 kann beispielsweise PVC, PP, WPC (Wood Plastic Composite) verwendet werden.

Die beiden Kunststoffprofile 1, 2 können stumpf aneinander anliegend oder auf Gehrung geschnitten miteinander verschweißt sein.

Jedes der beiden Kunststoffprofile 1, 2 ist in einer Spannvorrichtung 3 eingespannt.

Die folgenden Ausführungen können bevorzugt auf beide Spannvorrichtungen 3 zutreffen, sofern nicht etwas anderes beschrieben wird. Es wird daher im Folgenden eine der beiden Spannvorrichtungen 3 beschrieben. Die entsprechenden Ausführungen dazu können auf die zweite Spannvorrichtung 3 übertragen werden.

Die Spannvorrichtung 3 umfasst ein erstes (in der dargestellten Ausführungsvariante unteres) Spannelement 4 und ein zweites (in der dargestellten Ausführungsvariante oberes) Spannelement 5. Die beiden Spannelemente 4, 5 können sogenannte Spannbacken sein.

Das zweite Spannelement 5 ist in einem Abstand 6 zum ersten Spannelement 4 angeordnet, sodass das Kunststoffprofil 1 zwischen dem ersten und dem zweiten Spannelement 4, 5 eingespannt und damit während des gesamten Schweißvorgangs gehalten werden kann.

Bevorzugt umfasst die Spannvorrichtung 3 ein Anlageelement 7.

Das Anlageelement 7 kann beispielsweise leistenförmig ausgebildet sein. Es ist in der Spannvorrichtung 3 vorzugsweise derart angeordnet, dass es nach dem Einspannen des Kunststoffprofils 1 in die Spannvorrichtung 3 und zu Beginn des Verfahrens zum Verschweißen der beiden Kunststoffprofile 1, 2 miteinander einen Endbereich 8, d.h. eine Stirnfläche 9 des Endbereichs 8, in Richtung auf ein Heizelement 10 überragt, wie dies aus Fig. 1 ersichtlich ist.

Das Heizelement 10 ist Teil einer Schweißvorrichtung 11 zum Verschweißen der beiden Kunststoffprofile 1, 2. Insbesondere ist das Heizelement 10 als sogenannter Schweißspiegel ausgebildet. Zumindest eine der beschriebenen Spannvorrichtung 3, insbesondere beide Spannvorrichtungen 3, ist/sind bevorzugt ebenfalls Bestandteil der Schweißvorrichtung 11, wobei das Heizelement 10 zwischen zwei Spannvorrichtungen 3, insbesondere zwischen zwei der beschriebenen Spannvorrichtungen 3, am Beginn des Schweißverfahrens angeordnet ist, wie, dies aus Fig. 1 ersichtlich ist.

Vorzugsweise ist das Anlageelement 7 in Richtung auf das Heizelement 10, d.h. in einer ersten Richtung, verstellbar ausgebildet (= Verstellrichtung). Dazu kann das Anlageelement 7 zumindest teilweise aus einem Elastomer gebildet sein, sodass die Verstellbarkeit aus der elastomeren Verformbarkeit erhalten wird.

Bevorzugt weist die Spannvorrichtung 3 aber noch eine Abstützelement 12 auf. Dieses Abstützelement 12 ist zwischen dem ersten Spannelement 4 und dem zweiten Spannelement 5 angeordnet und liegt vorzugsweise direkt an dem Kunststoffprofil 1 an. Das Abstützelement 12 kann in Richtung auf Heizelement 10, also in der ersten Richtung, kürzer ausgeführt sein, als das zweite Spannelement 4 in gleicher Richtung betrachtet. Es entsteht damit eine Ausnehmung 13, in der das Anlageelement 7 zumindest teilweise aufgenommen bzw. aufnehmbar ist.

Es kann aber auch vorgesehen sein, dass das Abstützelement 12 Teil des zweiten Spannelementes 5 ist, also einteilig mit diesem ausgebildet ist. In diesem Fall kann das zweite Spannelement 5 zur Bereitstellung der Ausnehmung 13 als Winkelprofil ausgebildet sein.

Zwischen dem Anlageelement 7 und dem Abstützelement 12 ist bevorzugt zumindest ein Federelement 14 angeordnet. Vorzugsweise sind über die Breite des Anlageelementes 7 (Richtung senkrecht auf die Papierebene in Fig. 1) verteilt mehrere Federelemente 14 angeordnet, insbesondere zwei.

Das zumindest eine Federelement 14 - insbesondere sind sämtliche Federelemente 14 gleich ausgebildet - kann eine Schraubenfeder sein. Es ist aber auch möglich andere Federelemente 13, wie beispielsweise Blattfedern oder auch Pneumatik- oder Hydraulikzylinder oder elastomere Federelemente, einzusetzen.

Das Federelement 14 oder die Federelemente 14 ermöglicht/ermöglichen es, dass es/sie das Anlageelement 7 in Richtung über die Stirnfläche 9 des Kunststoffprofils 1 vorragend verbringt oder verbringen und dabei in den entlasteten oder einen zumindest teilweise entlasteten Zustand gelangen, der in Fig. 1 dargestellt ist.

Es sei in diesem Zusammenhang erwähnt, dass das erste Spannelement 3 sich bevorzugt ebenfalls nicht bis in den Endbereich des Kunststoffprofils 1 erstreckt, also gegenüber der Stirnfläche 9 des Kunststoffprofils 1 rückspringend angeordnet ist, wie dies in Fig. 1 dargestellt ist. Somit überragt das Anlageelement 7 das erste und das zweite Spannelement 4, 5 in der besagten Richtung.

Das zumindest eine Federelement 14 kann Teil des Anlageelementes 7 oder des Abstützelementes 12 sein.

Zur Begrenzung des Federweges in der Verstellrichtung des Anlageelementes 7 kann das Anlageelement 7 mit zumindest einem Verbindungselement, insbesondere zumindest einer Schraube 15, vorzugsweise mehreren Verbindungselementen, insbesondere mehrere Schrauben, mit dem Abstützelemente 12 verbunden sein, wie dies in Fig. 1 strichliert dargestellt ist. Das zumindest eine Verbindungselement kann dabei in einer Ausnehmung 16 des Anlageelementes 7 angeordnet sein, wobei sich diese Ausnehmung 16 in Richtung auf das Abstützelement 12 durchgehend durch das Anlageelement 7 erstreckt. Im vorderen Endbereich kann die Ausnehmung 16 eine stufenförmige Absetzung aufweisen. Es ist damit möglich, das zumindest eine Verbindungselement versenkt im Anlageelement 7 anzuordnen. Weiter ist im Falle einer Schraube 15 diese im Bereich des Anlageelementes 7 vorzugsweise mit einer glatten Oberfläche ausgebildet, sodass sich das Anlegeelement 7 ungehindert in der Verstellrichtung bewegen kann.

Dadurch, dass das Anlageelement 7 in der Ausnehmung 13 gleitend gehalten ist, ist es auch möglich, dass es in der Verstellrichtung verstellbar ist.

Gemäß einer Ausführungsvariante der Spannvorrichtung 3 kann vorgesehen sein, dass das zweite Spannelement 5 das in der Verstellrichtung verstellbare Anlageelement 7 umfasst, dass dieses also einen Teil des zweiten Spannelementes 5 bildet. Dies kann beispielsweise dadurch erreicht werden, dass das Anlageelement 7 zumindest teilweise aus einem verformbaren, also in der Verstellrichtung verstellbaren, Elastomer gebildet ist, das gegebenenfalls noch zumindest einen Hohlraum im inneren aufweist. Mit dem Hohlraum kann der Verstellweg vergrößert werden bzw. die Verstellung vereinfacht werden.

In der bevorzugten Ausführungsvariante der Spannvorrichtung 3 ist der Verstellweg des Anlageelementes 7 nicht so groß, dass es zu Gänze aus der Ausnehmung 13 herausrutscht. Es weist also eine ständige Führung durch die Anlage an der Oberfläche der Ausnehmung 13 auf. Es ist aber nach einer anderen Ausführungsvariante möglich, dass diese das Anlageelement 7 nicht ständig durch die Oberfläche der Ausnehmung 13 geführt ist.

Gemäß einer Ausführungsvariante der Spannvorrichtung 3, die in Fig. 1 anhand der rechten Spannvorrichtung 3 für das Kunststoffprofil 2 dargestellt ist, kann vorgesehen sein, dass das Anlageelement 7 zumindest ein federndes Element 17 aufweist. Diese federnde Element 17 ist an der, der Anlagefläche zum Kunststoffprofil 2 gegenüberliegenden Oberfläche des Anlageelementes 7, also insbesondere an der oberen Oberfläche, angeordnet.

Im einfachsten Fall kann diese federnde Element 17 als Erhebung ausgebildet sein, die eine Hohlraum 18 aufweist. Durch den Hohlraum 18 ist die Erhebung komprimierbar.

Es aber auch möglich, dass ähnlich zur Ausführung des Federelementes 14 dieses federnde Element 17 auch als Feder ausgeführt ist und gegebenenfalls mit einer Leiste verbunden ist, die an der Oberfläche des Ausnehmung 13 anliegt, wenngleich die erstgenannte Ausführungsvariante konstruktiv deutlich einfacher ist.

Vorzugsweise sind mehrere derartige federnden Elemente 17 angeordnet.

In einer Abwandlung dazu kann das zumindest eine federnde Element 17 alternativ oder zusätzlich an der unteren, die Ausnehmung 13 teilweise begrenzenden Oberfläche des zweiten Spannelementes 5 angeordnet sein.

Mit dem federnden Element(en) 17 kann eine bessere Anlage des Anlageelementes 7 an der Oberfläche des Kunststoffprofils 1, 2 erreicht werden, wodurch eine Welligkeit des Kunststoffprofils 1, 2 aufgrund des Schweißens besser vermieden werden kann.

Es kann nach einer weiteren Ausführungsvariante der Spannvorrichtung 3 vorgesehen sein, dass das Anlageelement 7 einen Vorsprung 19 mit einer im Vergleich zur einer Gesamthöhe 20 des Anlageelements 7 geringeren Höhe (in gleicher Richtung betrachtet) aufweist. Zur Ausbildung dieses Vorsprungs 19 kann das Anlageelement 7 mit einer Schräge 21 ausgeführt sein. Es ist aber auch ein stufenförmiger Übergang in den Vorsprung 19 möglich.

Der Vorsprung ist an der in Richtung auf das Heizelement 10 weisenden Oberfläche des Anlageelementes 7 angeordnet bzw. ausgebildet, wie dies aus den Fig. ersichtlich ist.

Das Anlageelement 7 besteht nach einer weiteren Ausführungsvariante der Spannvorrichtung 3 vorzugsweise aus den voranstehend genannten Gründen zumindest teilweise aus einem Polymer besteht, das ausgewählt ist aus einer Gruppe bestehend aus PA (Polyamid), PTFE (Polytetrafluorethylen), PEEK (Polyetheretherketon), polymere Kunststoffe auf Basis von Polyphthalamid (PPA), Duroplaste.

Insbesondere wird für das Anlageelement 7 ein (polymerer) Werkstoff (Kunststoff) eingesetzt, der eine Formbeständigkeit bis mindestens 300 °C aufweist.

Das Anlageelement kann auch faserverstärkt sein, beispielsweise mit Mineralfasern, wie z.B. Basaltfasern, oder mit Glasfasern oder Kohlenstofffasern.

Der Faseranteil an dem Polymeren für das Anlageelement 7 kann zwischen 10 Gew.-% und 70 Gew.-%, insbesondere zwischen 30 Gew.-% und 65 Gew.-%, betragen.

Wie voranstehend ausgeführt, weist zumindest eines der beiden Spannelemente 4, 5, also das erste Spannelement 4 und/oder das zweite Spannelement 5, zumindest ein Zentrierelement 22 auf. Mit dem zumindest einen Zentrierelement 22 kann eine relative Stellung des ersten zum zweiten Spannelement 4, 5 definiert werden, sodass eine im Gebrauch des Kunststoffprofils 1 äußere Oberfläche 23 (in Fig. 1 die dem Spannelement 5 der ersten (linken) Spannvorrichtung 3 zugewandte Oberfläche 23 des Kunststoffprofils 1) zumindest beim Verbinden der beiden Kunststoffprofile 1, 2 miteinander in der Ebene einer im Gebrauch des Kunststoffprofils 2 äußeren Oberfläche 24 (in Fig. 1 die dem Spannelement 5 der zweiten (rechten) Spannvorrichtung 3 zugewandte Oberfläche 24 des Kunststoffprofils 2) angeordnet ist. Es kann damit die Ausbildung einer Stufe im Schweißbereich zwischen den beiden Kunststoffprofilen 1, 2 besser vermieden werden.

Prinzipiell kann das Zentrierelement 22 in oder an dem ersten Spannelement 4 angeordnet sein, wie dies die Fig. 1 strichliert zeigt. Es kann alternativ oder zusätzlich dazu auch im oder am zweiten Spannelement 5 angeordnet sein, wie dies die Fig. 1 ebenfalls strichliert zeigt. In der bevorzugten Ausführungsvariante der Spannvorrichtung 3 ist das Zentrierelement 22 aber in oder an dem Anlageelement 7 zumindest teilweise angeordnet.

In Fig. 1 ist das Zentrierelement 22 in der rechten Spannvorrichtung 3 gezeigt. Es kann aber auch vorgesehen sein, dass das Zentrierelement 22 in der linken Spannvorrichtung 3 angeordnet ist. Weiter können auch mehrere Zentrierelemente 22 in der Spannvorrichtung 3 angeordnet sein, die gegebenenfalls alle gleich ausgeführt sind. Bei mehreren Zentrierelementen 22 ist es weiter möglich, dass beide Spannvorrichtungen 3 mit jeweils zumindest einem Zentrierelement 22 ausgerüstet sind.

Das Zentrierelement 22 kann nach einer Ausführungsvariante der Spannvorrichtung 3 stiftförmig ausgebildet sein. Es kann einen runden, ovalen, mehreckigen, wie beispielsweise viereckigen oder sechseckigen oder achteckigen Querschnitt aufweisen. Gemäß einer weiteren Ausführungsvariante dazu kann das Zentrierelement 22 zumindest bereichsweise einen sich verjüngenden Querschnitt aufweist. Insbesondere ist dabei ein vorderer Bereich des Zentrierelementes mit verjüngendem Querschnitt ausgebildet, um damit das Einführen des Zentrierelementes 22 in eine hierfür vorgesehene Ausnehmung 25 in der jeweils anderen Spannvorrichtung 3 zu erleichtern. Beispielsweise kann das Zentrierelement zumindest bereichsweise konusförmig bzw. kegelstumpfförmig ausgebildet sein, insbesondere im vorderen, der Ausnehmung 25 zugewandten Bereich.

Die Ausnehmung 25 weist ein zum Querschnitt des Zentrierelementes 22 passende Querschnittsgeometrie auf, sodass das Zentrierelement 22 zwar eingeschoben werden kann, die die Ausnehmung 25 aufweisende Spannvorrichtung 3 aber in Richtung senkrecht auf das Zentrierelement 22 nicht mehr verschoben werden kann, also bei der in Fig. 1 dargestellten Ausführungsvariante nicht mehr nach oben oder unten ausweichen kann, wenn das Zentrierelement 22 in die Ausnehmung 25 eingeführt ist.

Die Ausnehmung 25 ist, wie dies aus den Fig. 1 - 4 ersichtlich ist, auf gleicher Höhe, d.h. im gleichen Höhenbereich, ausgebildet bzw. angeordnet, wie das Zentrierelement 22, sodass in der zentrierten Stellung der beiden Spannvorrichtungen 3 zueinander keine Stufe zwischen den Oberflächen 23, 24 der Kunststoffprofile 1, 2 ausgebildet ist.

Sofern das voranstehend beschriebene Verbindungselement, also beispielsweise die Schraube 15, vorhanden ist, kann die Ausnehmung 25 für die Aufnahme des Zentrierelementes 22 auch durch die Ausnehmung 16 für die Aufnahme des Verbindungselementes gebildet sein, wie dies in Fig. 1 dargestellt ist.

Neben der stiftförmigen Ausbildung des Zentrierelementes 22 kann dieses auch anders ausgeführt sein, wobei in diesem Fall auch die Ausnehmungen 25 entsprechend zu adaptieren ist oder anstelle der Ausnehmung 25 ein anderes Gegenstück zum Zentrierelement 22 vorhanden ist. Beispielsweise kann das Zentrierelement 22 leistenförmig ausgebildet sein, und mit einer nutförmigen Ausnehmung 25 zusammenwirken.

Wie bereits ausgeführt, wird die Spannvorrichtung in der Schweißvorrichtung 11 zur Durchführung des Verfahrens zum Verschweißen von zwei Kunststoffprofilen 1, 2 miteinander eingesetzt. Dazu werden die beiden Kunststoffprofile 1, 2 in jeweils einer Spanneinrichtung eingespannt, wobei zumindest eine Spanneinrichtung, vorzugsweise beide Spanneinrichtungen, durch eine der beschriebenen Spannvorrichtungen 3 gebildet ist, und insbesondere eine Spannvorrichtung 3 das zumindest eine Zentrierelement 22 und die andere Spannvorrichtung 3 die Ausnehmung 25 aufweist. Die beiden Kunststoffprofile 1, 2 werden des gesamten Schweißverfahrens in den Spannvorrichtungen 3 gehalten.

Zwischen den beiden Kunststoffprofilen 1, 2 wird das Heizelement 10 angeordnet. Danach werden die beiden Spannvorrichtungen 3 gemäß Pfeilen 26 gegen das Heizelement 3 angestellt. Durch dieses Anstellen gelangen die Anlageelemente 7 zur spaltlosen Anlage an das Heizelement 10, wobei sie während des Anlegens weiter in die Ausnehmungen 13 verschoben werden, bis auch die Stirnflächen 9 der Kunststoffprofile 1, 2 an Oberflächen des Heizelementes 10 anliegen, wie dies in Fig. 2 dargestellt ist.

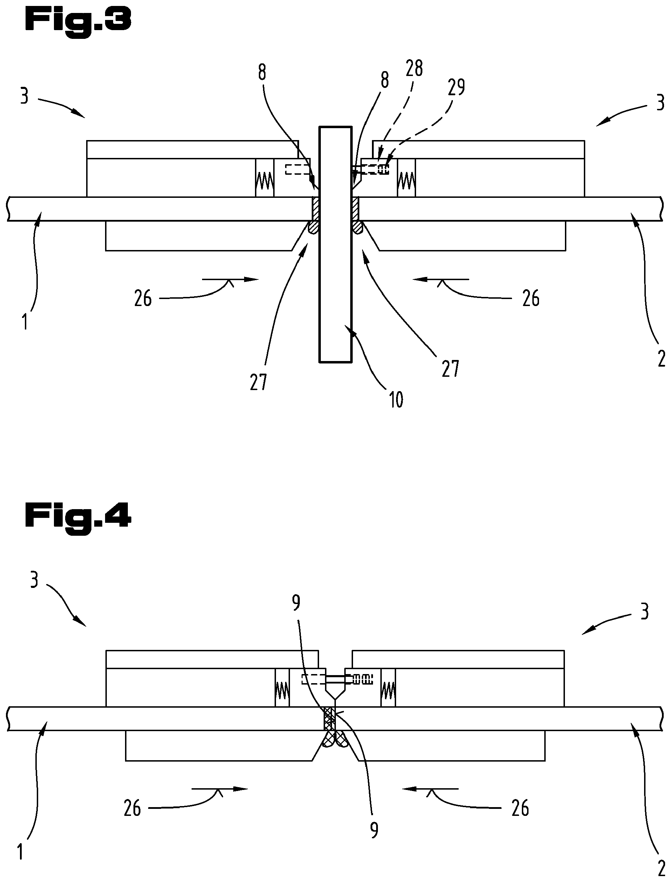

Durch die Hitze, die das Heizelement 10 abstrahlt, werden die Endbereiche 8 der Kunststoffprofile 1, 2 erweicht, wie dies in Fig. 3 durch die Schraffur angedeutet ist. Gleichzeitig werden die Kunststoffprofile 1, 2 weiter an das Heizelement 10 angepresst, sodass sie durch das Erreichen der Endbereiche 8 weiter in Richtung der Pfeile 26 verstellt werden.

Während des Erhitzens der Endbereiche 8 liegen die Anlageelemente 7 jeweils direkt an einem der Kunststoffprofile 1, 2 und direkt an dem Heizelement 10 an, sodass die Stirnfläche des Anlageelements 7 mit der Stirnfläche 9 des zu verschweißenden Endbereichs 8 der Kunststoffprofile 1, 2 fluchtend angeordnet sind.

Mit dem Erweichen des Kunststoffes und durch das Anpressen der Kunststoffprofile 1, 2 an das Heizelemente 10 bilden sich in den Endbereichen 8 Schweißwülste 27 aus. Nachdem die Anlageelemente 7 an der äußeren Oberfläche der Kunststoffprofile 1, 2 spaltfrei anliegen, können diese Schweißwülste 23 nur in die entgegengesetzte Richtung ausweichen. Sie werden also in die Hohlkammer(n) der Kunststoffprofile 1, 2 verdrängt.

Sobald die Endbereiche 8 der Kunststoffprofile 1, 2 ausreichend erweicht sind, werden sie mit den Spannvorrichtungen 3 entgegen der Richtung der Pfeile 26 von Heizelement 10 entfernt, letzteres aus dem Zwischenraum zwischen den Endbereichen 8 der Kunststoffprofile 1, 2 entfernt und danach die beiden Kunststoffprofile 1, 2 mit den Spannvorrichtungen 3 wieder entsprechend den Pfeilen 26 aufeinander zu bewegt bis sie aneinander an den Stirnflächen 9 anliegen, wie dies in Fig. 4 gezeigt ist. Dabei liegen auch die beiden Anlageelemente 7 spaltfrei aneinander an. Dieser Verfahrensschritt ist in Fig. 4 dargestellt. Diese Stellung wird solange gehalten, bis die beiden Kunststoffprofile 1, 2 miteinander verbunden (verschweißt sind).

Nachdem die Schweißnaht ausgebildet und kälter geworden ist, werden die beiden miteinander verbundenen Kunststoffprofile aus der Spannvorrichtung 3 entfernt.

Zur einfacheren Ableitung des den Schweißwulst 23 bildenden Kunststoffmaterials kann das erste Spannelement 4 mit einer Schräge versehen sein, wie dies in den Fig. 1 bis 4 dargestellt ist.

Nach einer Ausführungsvariante kann vorgesehen sein, dass die Anlageelemente 7 jeweils mit dem Federelement 14 gegen das Heizelement 10 gepresst werden.

Es kann weiter vorgesehen sein, dass die Anlageelemente 7 jeweils mit zumindest einem federnden Element 17 gegen jeweils eines der beiden Kunststoffprofile 1, 2 gepresst werden.

Wie aus dem Ablauf des in den Fig. 1 - 4 gezeigten Verfahrens ersichtlich ist, liegt in der bevorzugten Ausführungsvariante der Erfindung das Zentrierelement 22 (oder liegen die Zentrierelemente 22) während des Aufheizens der Endbereiche 8 der Kunststoffprofile 1, 2 an dem Heizelement 10 an. Dies kann beispielsweise durch eine Vorspannung des Zentrierelementes 22 (oder der Zentrierelemente 22) in Richtung der Bewegungsrichtung entsprechend den Pfeilen 26 erreicht werden. Dazu kann das Zentrierelement 22 (oder können die Zentrierelemente 22) in einer entsprechenden Ausnehmung 28 aufgenommen sein. Die Ausnehmung 28 (bzw. die Ausnehmungen 28) sind also in der Spannvorrichtung 3 ausgebildet bzw. angeordnet, die auch das zumindest eine Zentrierelement 22 aufweist. In der Ausnehmung kann zwischen dem Zentrierelement 22 und dem Grund der Ausnehmung ein weiteres Federelement 29 angeordnet sein, beispielsweise eine Spiralfeder oder eine Blattfeder oder eine Elastomerfeder, etc., das das Zentrierelement 22 in Richtung auf das Heizelement 10 drückt. Aus Gründen der besseren Verständlichkeit ist die Ausnehmung 29 in Fig. 3 überdimensioniert dargestellt. Die Ausnehmung 29 ist bevorzugt nur so groß, dass das Zentrierelement 22 in dieser Ausnehmung 29 geführt ist.

Die Führung des Zentrierelementes 22 kann auch anders ausgeführt sein, insbesondere wenn das Zentrierelement 22 nicht in sondern auf der Spannvorrichtung 3 angeordnet ist. Beispielsweise kann dazu auf der Spannvorrichtung 3 ein eigenes Führungselement angeordnet werden.

Durch die Vorspannung des Zentrierelementes 22 kann erreicht werden, dass dieses beim Entfernen des Heizelementes 10 automatisch in die Ausnehmung 25 der anderen Spannvorrichtung 3 eingeleitet und damit die Zentrierung der Spannvorrichtungen 3, d.h. von deren Spannelementen 4, 5, zueinander automatisch erfolgt.

Das Zentrierelement 22 bzw. die Zentrierelement 22 kann/können also in der ersten Richtung gemäß Pfeil 26 verstellbar ausgeführt sein.

Nach eine weiteren Ausführungsvariante kann vorgesehen sein, dass das Zentrierelement 22 bzw. die Zentrierelemente 22 zumindest teilweise aus einem Polymer besteht/bestehen, das ausgewählt ist aus einer Gruppe bestehend aus PA (Polyamid), PTFE (Polytetrafluorethylen), PEEK (Polyetheretherketon), polymere Kunststoffe auf Basis von Polyphthalamid (PPA), Duroplaste.

Insbesondere wird für das Zentrierelemente 22 zumindest im vorderen, dem Heizelement 10 zugewandten Bereich ein (polymerer) Werkstoff (Kunststoff) eingesetzt, der eine Formbeständigkeit bis mindestens 300 °C aufweist.

Das Zentrierelemente 22 kann auch faserverstärkt sein, beispielsweise mit Mineralfasern, wie z.B. Basaltfasern, oder mit Glasfasern oder Kohlenstofffasern.

Der Faseranteil an dem Polymeren für das Zentrierelemente 22 kann zwischen 10 Gew.-% und 70 Gew.-%, insbesondere zwischen 30 Gew.-% und 65 Gew.-%, betragen.

Die Erfindung betrifft insbesondere auch eine Schweißvorrichtung 11 zum Verschweißen der zwei Kunststoffprofilen 1, 2 miteinander umfassend das Heizelement 10, insbesondere einen Schweißspiegel, und zwei Spannvorrichtungen 3 zum Einspannen der beiden Kunststoffprofile 1, 2, wobei die Spannvorrichtungen 3 jeweils ein erstes Spannelement 4 und ein in einem Abstand 6 dazu angeordnetes zweites Spannelement 5 umfassen, zwischen denen je ein Kunststoffprofil 1 oder 2 eingespannt werden kann, wobei zwischen den ersten Spannelementen 4 und den zweiten Spannelementen 5 je ein in einer ersten Richtung verstellbares, ein Federelement aufweisendes Anlageelement 7 angeordnet ist oder die zweiten Spannelemente 5 jeweils das in einer ersten Richtung verstellbare Anlageelement 7 umfassen, wobei eine Stirnfläche der Anlageelemente 7 jeweils mit einer Stirnfläche 9 eines zu verschweißenden Endbereichs 8 der Kunststoffprofile 1, 2 fluchtend anordenbar ist, wobei die Stirnfläche an einem Vorsprung 19 des Anlageelementes 7 ausgebildet ist, wobei der Vorsprung 19 eine im Vergleich zur einer Gesamthöhe 20 des Anlageelements 7 geringere Höhe aufweist, und die Federelemente beim Ausfahren in den entlasteten oder einen zumindest teilweise entlasteten Zustand verbringbar sind, wobei weiter die Anlageelemente 7 mit dem Erweichen des Kunststoffes und durch das Anpressen der Kunststoffprofile 1, 2 an das Heizelement 10 weiter in zueinander entgegengesetzter Richtung verstellbar sind, sodass die fluchtende Anordnung mit den zu verschweißenden Endbereichen 8 der Kunststoffprofile 1, 2 aufrecht erhalten bleibt und sich in den Endbereichen 8 Schweißwülste 27 nur im Inneren der Kunststoffprofile 1, 2 ausbilden können. Das erste und/oder das zweite Spannelement 4, 5 weist zumindest ein Zentrierelement 22 auf, mit dem eine relative Stellung des ersten zum zweiten Spannelement 4, 5 definiert wird bzw. ist.

Weiter betrifft die Erfindung insbesondere ein Verfahren zum Verschweißen von zwei Kunststoffprofilen 1, 2 miteinander, nach dem die beiden Kunststoffprofile 1, 2 in je einer Spannvorrichtung 3 gehalten werden, zu verschweißende Endbereiche 8 der beiden Kunststoffprofile 1, 2 mit einem Heizelement 10 durch Anlage unter Druck an das Heizelement 10 erhitzt werden und danach die beiden Kunststoffprofile 1, 2 mit den erwärmten Endbereichen 8 gegeneinander gepresst werden, wobei weiter während des Erhitzens der zu verschweißenden Endbereiche 8 Anlageelemente 7 der Spannvorrichtungen 3 jeweils mit einem Federelement 14 gegen das Heizelement 10 gepresst werden, wobei die Anlageelemente 7 jeweils direkt an einem der Kunststoffprofile 1, 2 und direkt an dem Heizelement 10 anliegend angeordnet werden, sodass eine Stirnfläche des Anlageelements 7 mit einer Stirnfläche 9 des zu verschweißenden Endbereichs 8 der Kunststoffprofile 1, 2 fluchtend angeordnet wird und die Anlageelemente 7 mit dem Erweichen des Kunststoffes und durch das Anpressen der Kunststoffprofile 1, 2 an das Heizelement 10 weiter in zueinander entgegengesetzter Richtung verstellt werden, sodass die fluchtende Anordnung mit den zu verschweißenden Endbereichen 8 der Kunststoffprofile 1, 2 aufrecht erhalten bleibt und sich in den Endbereichen 8 Schweißwülste 27 nur im Inneren der Kunststoffprofile 1, 2 ausbilden können. Nach Entfernung des Heizelementes 10 werden die Spanneinrichtungen 3 mit zumindest einem Zentrierelement 22 zueinander zentriert.

Die Ausführungsbeispiele zeigen bzw. beschreiben mögliche Ausführungsvarianten, wobei auch Kombinationen der einzelnen Ausführungsvarianten untereinander möglich sind.

Der Ordnung halber sei abschließend darauf hingewiesen, dass zum besseren Verständnis des Aufbaus der Spannvorrichtung 3 bzw. der Schweißvorrichtung 11 diese nicht zwingenderweise maßstäblich dargestellt wurden.

### Bezugszeichenaufstellung

- 1: Kunststoffprofil
- 2: Kunststoffprofil
- 3: Spannvorrichtung
- 4: Spannelement
- 5: Spannelement
- 6: Abstand
- 7: Anlageelement
- 8: Endbereich
- 9: Stirnfläche
- 10: Heizelement
- 11: Schweißvorrichtung
- 12: Abstützelement
- 13: Ausnehmung
- 14: Federelement
- 15: Schraube
- 16: Ausnehmung
- 17: Element
- 18: Hohlraum
- 19: Vorsprung
- 20: Gesamthöhe
- 21: Schräge
- 22: Zentrierelement
- 23: Oberfläche
- 24: Oberfläche
- 25: Ausnehmung
- 26: Pfeil
- 27: Schweißwulst
- 28: Ausnehmung
- 29: Federelement

## Patentansprüche

1. Spannvorrichtung (3) umfassend ein erstes Spannelement (4) und ein in einem Abstand (6) dazu angeordnetes zweites Spannelement (5), zwischen denen ein Kunststoffprofil (1 oder 2) eingespannt werden kann, wobei bevorzugt zwischen dem ersten Spannelement (4) und dem zweiten Spannelement (5) ein in einer ersten Richtung verstellbares Anlageelement (7) angeordnet ist oder das zweite Spannelement (5) das in einer ersten Richtung verstellbare Anlageelement (7) umfasst, **dadurch gekennzeichnet, dass** das erste und/oder das zweite Spannelement (4, 5) zumindest ein Zentrierelement (22) aufweist.

2. Spannvorrichtung (3) nach Anspruch 1, **dadurch gekennzeichnet, dass** das Zentrierelement (22) in oder an dem Anlageelement (7) angeordnet ist.

3. Spannvorrichtung (3) nach Anspruch 1 oder 2, **dadurch gekennzeichnet, dass** das Zentrierelement (22) stiftförmig ausgebildet ist.

4. Spannvorrichtung (3) nach einem der Ansprüche 1 bis 3, **dadurch gekennzeichnet, dass** das Zentrierelement (22) zumindest bereichsweise einen sich verjüngenden Querschnitt aufweist.

5. Spannvorrichtung (3) nach einem der Ansprüche 1 bis 4, **dadurch gekennzeichnet, dass** das Zentrierelement (22) in der ersten Richtung verstellbar ausgebildet ist.

6. Spannvorrichtung (3) nach einem der Ansprüche 1 bis 4, **dadurch gekennzeichnet, dass** das Zentrierelement (22) vorgespannt ist.

7. Spannvorrichtung (3) nach einem der Ansprüche 1 bis 6, **dadurch gekennzeichnet, dass** das Zentrierelement (22) zumindest teilweise aus einem Polymer besteht, das ausgewählt ist aus einer Gruppe bestehend aus PA, PTFE, PEEK, polymere Kunststoffe auf Basis von PPA.

8. Schweißvorrichtung (11) zum Verschweißen von zwei Kunststoffprofilen (1, 2) miteinander umfassend ein Heizelement (10), insbesondere einen Schweißspiegel, und zumindest eine Spannvorrichtung (3) zum Einspannen von zumindest einem der beiden Kunststoffprofile (1, 2), **dadurch gekennzeichnet, dass** die Spannvorrichtung (3) entsprechend einem der vorhergehenden Ansprüche ausgebildet ist.

9. Verfahren zum Verschweißen von zwei Kunststoffprofilen (1, 2) miteinander, nach dem die beiden Kunststoffprofile (1, 2) in je einer Spannvorrichtung (3) gehalten werden, zu verschweißende Endbereiche (8) der beiden Kunststoffprofile (1, 2) mit einem Heizelement (10) erhitzt werden und danach die beiden Kunststoffprofile (1, 2) mit den erwärmten Endbereichen (8) gegeneinander gepresst werden, wobei bevorzugt während des Erhitzens der zu verschweißenden Endbereiche (8) Anlageelemente (7) der Spannvorrichtungen (3) gegen das Heizelement (10) gepresst werden, wobei die Anlageelemente (7) jeweils direkt an einem der Kunststoffprofile (1, 2) und direkt an dem Heizelement (10) anliegend angeordnet werden, sodass eine Stirnfläche des Anlageelements (7) mit einer Stirnfläche (9) des zu verschweißenden Endbereichs (8) der Kunststoffprofile (1, 2) fluchtend angeordnet wird, wobei weiter nach dem Erwärmen der beiden Kunststoffprofile (1, 2) das Heizelement (10) entfernt wird und die beiden Kunststoffprofile (1, 2) mit den Endbereichen (8) aneinandergedrückt werden, **dadurch gekennzeichnet, dass** nach Entfernung des Heizelementes (10) die Spanneinrichtungen (3) mit zumindest einem Zentrierelement (22) zueinander zentriert werden.

10. Verfahren nach Anspruch 9, **dadurch gekennzeichnet, dass** die Zentrierung (22) der Spannelemente zueinander automatisch erfolgt.
